# FASCICULE DE BREVET EUROPEEN

(11) **EP 0 490 717 B1**
(45) Date de publication et mention de la délivrance du brevet: **06.04.1994**
(21) Numéro de dépôt: 91403074.7
(22) Date de dépôt: 15.11.1991
(51) Int. Cl.: F16F 13/00, B60K 5/12

(54) **Support hydroélastique**
Hydroelastisches Lager
Hydro-elastic mounting

(30) Priorité: 10.12.1990 FR 9015439
(43) Date de publication de la demande: 17.06.1992
(73) Titulaire: AUTOMOBILES PEUGEOT, 75116 Paris (FR); AUTOMOBILES CITROEN, 92200 Neuilly-sur-Seine (FR)
(72) Inventeur: Le Fol, Marcel, F-35410 Domloup (FR); Robic, Pascal, F-35000 Rennes (FR)
(74) Mandataire: Obolensky, Michel

(56) Documents cités:
- EP-A- 0 115 417
- EP-A- 0 163 162
- EP-A- 0 297 974
- DE-A- 3 801 108
- FR-A- 2 364 373
- PATENT ABSTRACTS OF JAPAN vol. 8, no. 220 (M-330)(1657) 6 Octobre 1984 & JP-A-59103044 (NISSAN JIDOSHA) 14 Juin 1984
- PATENT ABSTRACTS OF JAPAN vol. 13, no. 225 (M-830)(3573) 25 Mai 1989 & JP-A-01040733 (TOKAI RUBBER IND.) 13 Fèvrier 1989
- PATENT ABSTRACTS OF JAPAN vol. 12, no. 286 (M-727)(3133) 5 Août 1988& JP-A-63062929 (HONDA MOTOR CO.) 19 Mars 1988

## Description

La présente invention concerne un support hydroélastique destiné à être interposé entre deux ensembles à suspendre l'un par rapport à l'autre.

L'invention concerne notamment un support pour la suspension d'un moteur dans un véhicule automobile.

Le document FR-A-2.364.373 décrit et représente un support hydroélastique du type comprenant deux armatures reliées respectivement aux deux ensembles à suspendre, ces deux armatures étant réunies par une masse de matériau élastomère, le support comportant au moins une chambre de travail et une chambre d'expansion, ces deux chambres étant remplies au moins partiellement de liquide et reliées entre elles par un passage de communication, et du type dans lequel la chambre de travail est délimitée en partie par une cloison mobile en matériau élastique dont la face extérieure comporte un poussoir avec lequel coopère une came d'un dispositif d'entraînement de la cloison mobile pour appliquer à cette dernière des déplacements commandés de manière à créer dans la chambre de travail des forces de pression synchrones avec les harmoniques des vibrations de l'un des deux ensembles à isoler tel que par exemple une machine tournante ou un moteur à combustion interne. Les déplacements auxquels est soumis le poussoir sont par exemple des déplacements alternatifs de fréquence et de phase égales à celles du défaut d'équilibrage à filtrer.

L'agencement décrit et représenté dans ce document est de conception particulièrement complexe, ce document ne proposant par ailleurs aucune solution industrialisable permettant de monter de manière simple un tel type de support hydroélastique entre la caisse d'un véhicule automobile et le groupe motopropulseur tout en assurant l'entraînement en rotation de la came d'excitation de la cloison mobile.

Afin de remédier à ces inconvénients, l'invention propose un support du type mentionné plus haut, caractérisé en ce que l'axe d'entraînement en rotation de la came est monté tournant dans un palier fixé à l'une des deux armatures du support.

Selon d'autres caractéristiques de l'invention :
- cette armature est une armature de forme générale cylindrique dont une première extrémité axiale est reliée à la masse de matériau élastomère et dont la seconde extrémité axiale reçoit un couvercle de fermeture dans lequel est agencé le palier ;
- la seconde extrémité axiale de l'armature cylindrique comporte une bride de fixation du support sur l'ensemble et le couvercle comporte une bride radiale agencée en vis-à-vis de la bride de l'armature contre laquelle elle est serrée axialement avec interposition de la portion correspondante de l'ensemble qui reçoit le support hydroélastique ; et
- le poussoir comporte un galet monté tournant selon un axe perpendiculaire à la direction d'action du poussoir sur la cloison mobile et avec lequel coopère la came dont l'axe de rotation est parallèle à celui du galet.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en coupe axiale selon la ligne 1-1 de la figure 2 d'un support hydroélastique réalisé conformément aux enseignements de l'invention ;
- la figure 2 est une vue axiale en coupe selon la ligne 2-2 de la figure 1 ; et
- la figure 3 est un schéma équivalent permettant d'expliquer le mode de fonctionnement du support représenté aux figures 1 et 2.

Le support 10 illustré aux figures est constitué d'une première armature de forme générale cylindrique 12 et d'une seconde armature 14 qui sont reliées entre elles par une masse de matériau élastomère 15.

L'armature 12 est prévue pour être reliée à une partie 16 du groupe motopropulseur d'un véhicule automobile tandis que la seconde armature 14 est prévue pour être reliée à une partie de la structure du véhicule par une liaison filetée 18.

La première armature 12 présente une forme générale cylindrique d'axe X-X.

La première extrémité axiale 20 de l'armature 12 est noyée dans le matériau élastomère de la masse 15.

La seconde extrémité axiale opposée 22 de l'armature 12 est une bride qui s'étend dans un plan radial et qui permet la fixation de l'armature 12 à la portion 16 du groupe motopropulseur par exemple au moyen d'ensembles vis-écrou 24.

La masse en matériau élastomère 15 délimite en partie une chambre de travail 26 à sa partie inférieure en considérant les figures.

La chambre 26 est également délimitée par une plaque intermédiaire rigide 28 de forme générale annulaire et par une cloison mobile déformable élastiquement 30 qui est susceptible de se déplacer sensiblement selon la direction X-X.

La cloison mobile 30 se prolonge à sa périphérie par une portion de raccordement 32 qui est adhérisée sur un renfort cylindrique 34 dont le bord axial inférieur 36 est serti dans l'ouverture circulaire centrale de la plaque 28.

La plaque 28 coopère avec une plaque symétrique 38 pour délimiter entre elles un canal de passage 40 qui, selon une technique connue, met en communication la chambre de travail 26 avec une chambre d'expansion 42.

Les chambres 26 et 42 sont remplies de liquide.

La chambre d'expansion 42 est délimitée d'une part par la face supérieure de la plaque annulaire 38 et d'autre part par une portion de membrane déformable élastiquement 44 venue de matière avec la cloison mobile 30, la portion de liaison 32 et qui est elle-même adhérisée sur un renfort cylindrique extérieur 46.

Le renfort 46 est emboîté axialement avec serrage dans l'armature cylindrique 12 et assure le maintien en position des plaques 28 et 38 en appui axial contre l'épaulement radial interne 50 de l'armature cylindrique 12 partiellement noyé dans le matériau élastomère de la masse 15.

La face supérieure 53 de la cloison mobile 30 située à l'extérieur de la chambre de travail 26 comporte un poussoir d'actionnement 52 qui permet de lui appliquer des efforts selon la direction X-X.

Le poussoir 52 comporte une plaque 54 qui s'étend selon un plan sensiblement perpendiculaire à l'axe X-X et qui est adhérisée à la face supérieure 53 de la cloison mobile 30.

Le poussoir 52 comporte un galet d'actionnement 56 qui est monté à rotation sur le poussoir 52 autour d'un axe géométrique Y-Y sensiblement perpendiculaire à l'axe X-X du support, et ceci grâce a un montage en chape constitué par deux plaques 58 entre lesquelles est reçu le galet 56 qui est monté tournant sur un axe 60.

La chambre 42 est de forme générale annulaire ou torique et s'étend autour du renfort cylindrique 34. La chambre 42 délimite ainsi un logement intérieur 51 de forme cylindrique dans lequel est disposé le poussoir 52 et son galet 56. Le poussoir et son galet sont d'une hauteur inférieure à celle du logement 51 ce qui permet de réaliser un ensemble particulièrement compacte et de hauteur hors-tout réduite.

L'actionnement du poussoir 52 par l'intermédiaire du galet 56 est effectué à l'aide d'une came 62 qui est elle-même montée tournante et entraînée en rotation autour d'un axe géométrique Z-Z parallèle à l'axe Y-Y du galet 56 et donc perpendiculaire à l'axe X-X du support.

La came 62 comporte un arbre d'entrainement en rotation 64 qui est monté tournant à l'aide de deux roulements à billes 66 agencés de part et d'autre de la came et qui en constitue le palier de roulement.

Les roulements 66 sont montés dans un élément 68 formant couvercle qui est agencé dans l'armature cylindrique 12 dans laquelle il est centré au moyen d'une portion cylindrique de centrage 70 et qui est fermé à sa partie supérieure par un voile 72.

Le voile 72 se termine radialement par un prolongement 74 en forme de bride qui s'étend sensiblement en vis-à-vis de la bride 22 de l'armature 12.

La portion 16 du groupe motopropulseur est interposée entre les brides 22 et 74.

Le serrage axial en position du couvercle 68 est assuré au moyen de vis de fixation 76 décalées angulairement par rapport aux ensembles vis-écrou 24.

Le couvercle 68 est par exemple une pièce en matière plastique moulée qui comporte un évidement central 80 formé à la face inférieure du voile 72 et dans lequel est agencée la came 62.

L'évidement 80 est délimité transversalement d'une part par une cloison verticale 82 qui reçoit l'un des roulements 66 et d'autre part par l'extrémité 84 d'un prolongement tubulaire 86 du couvercle 68 dans lequel s'étend l'extrémité libre d'entrainement 88 de l'arbre d'entraînement 64 de la came 62.

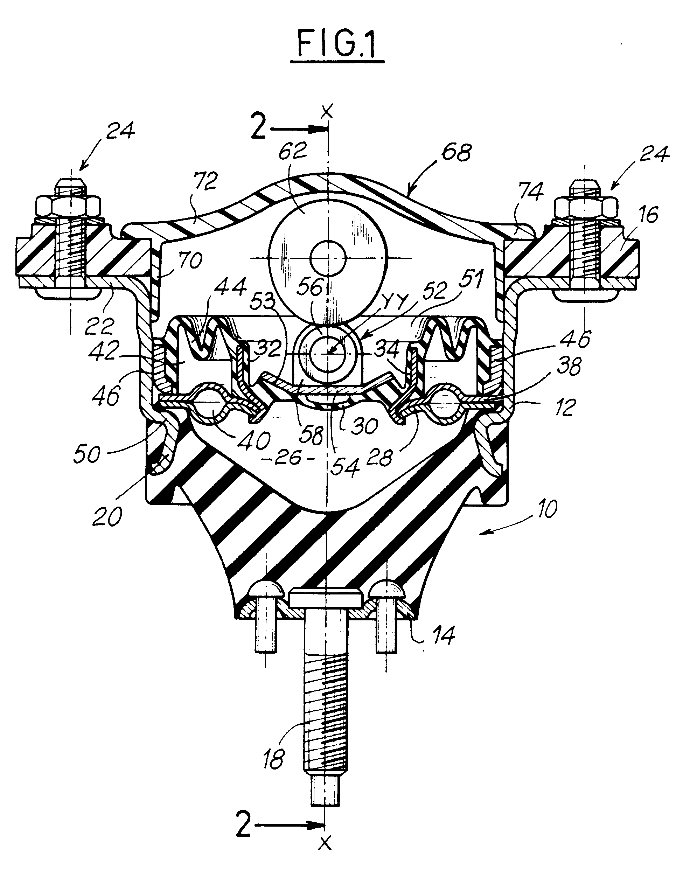

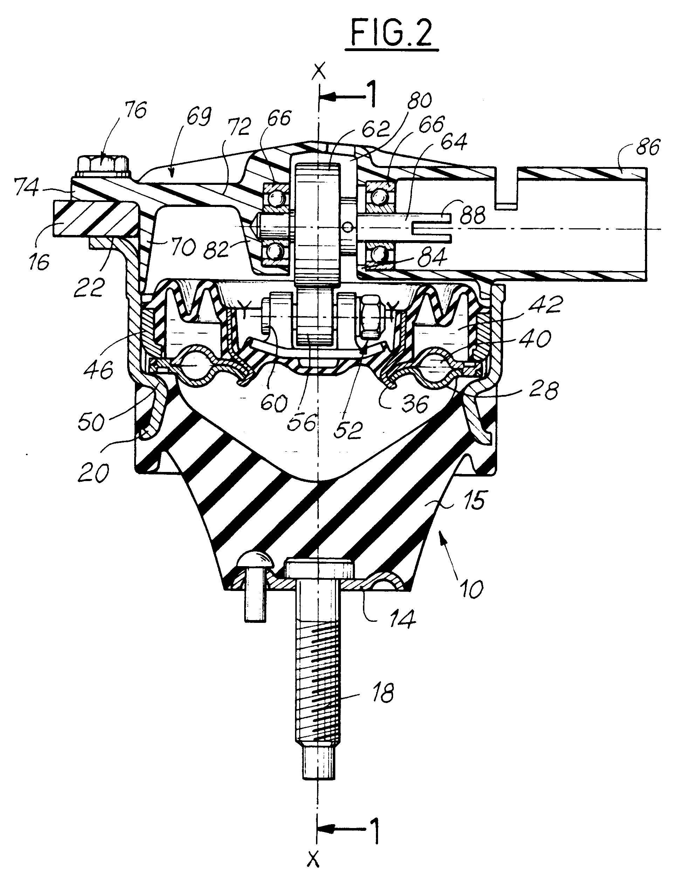

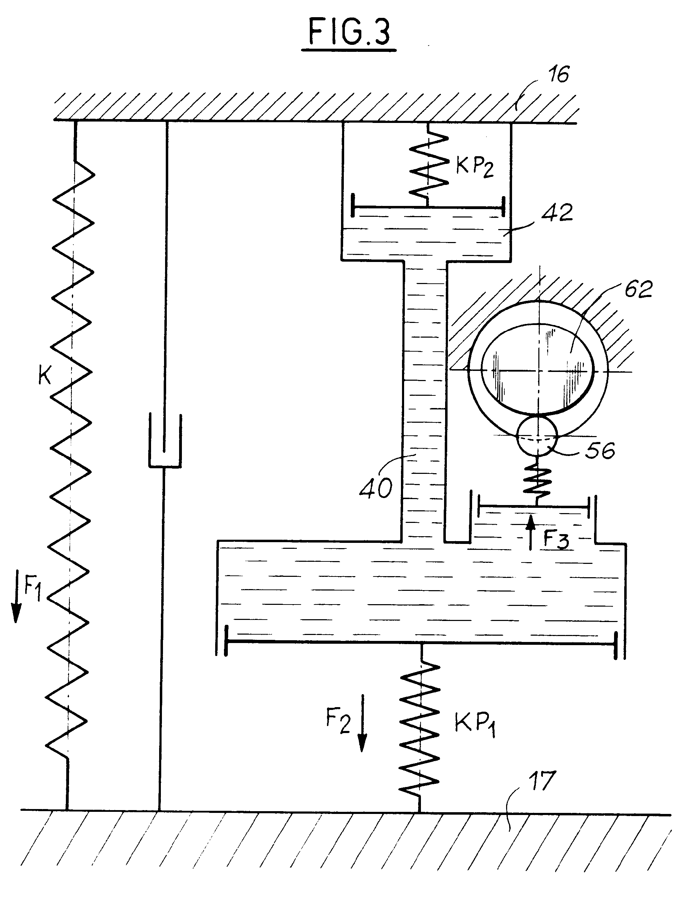

On décrira maintenant le mode de fonctionnement du support hydroélastique représenté aux figures 1 et 2 en se reportant à la figure 3.

Les vibrations du groupe motopropulseur 16 sont transmises à la caisse du véhicule par l'intermédiaire de l'armature 12, de la masse en matériau élastomère 15 et de l'armature 14.

L'effort appliqué au support peut être décomposé en deux efforts distincts.

Premièrement l'effort F1, également appelé effort direct dont la valeur dépend de la raideur K de la masse en matériau élastomère 15.

Deuxièmement l'effort F2 qui résulte de l'action du liquide contenu dans la chambre de travail 26 et dont la valeur dépend de la raideur de tenue à la pression KP1.

La came 62 qui est entraînée en rotation de façon synchrone par rapport à la rotation du groupe motopropulseur, et notamment par rapport à la rotation du vilebrequin de ce dernier, transmet un effort F3 parfaitement synchrone et dont la valeur est telle que F3 = F1 + F2. L'action de la came 62 a donc pour effet d'annuler tout effort transmis à la structure 17.

La masse en élastomère 15 se comporte comme une pompe et elle est montée comprimée lors de la mise en place du support hydroélastique.

Le dispositif qui vient d'être décrit est particulièrement efficace pour amortir ou atténuer les vibrations de la caisse du véhicule, ainsi que pour empêcher la transmission des vibrations venant du moteur afin de procurer un meilleur confort du véhicule. L'utilisation connue du passage 40 qui relie entre elles les chambres de travail 26 et d'expansion 42 procure un amortissement élevé à la fréquence de hachis.

L'action de la came 62 permet d'appliquer au support hydroélastique des forces de pression depuis l'extérieur. Ces forces de pression sont synchrones avec les harmoniques d'ordre 2 des vibrations d'excitation provenant du groupe motopropulseur.

Les forces de pression sont ainsi injectées dans la chambre de travail d'un support hydroélastique du type à amortissement à colonne par ondes successives.

Comme on l'a mentionné précédemment en référence au schéma de la figure 3, la raideur résultante est nulle.

La came 62, de manière à être entraînée en rotation de façon synchrone avec le groupe motopropulseur, est par exemple reliée par son arbre 88 à une poulie entraînée directement par la courroie de distribution du groupe motopropulseur, ou par tout autre mécanisme permettant d'entraîner la came.

## Revendications

1. Support hydroélastique (10) destiné à être interposé entre deux ensembles à suspendre l'un par rapport à l'autre, notamment pour la suspension d'un moteur dans un véhicule automobile, du type comprenant deux armatures (12, 14) reliées respectivement aux deux ensembles, ces deux armatures étant réunies par une masse de matériau élastomère (15), le support (10) comportant au moins une chambre de travail (26) délimitée au moins en partie par la masse de matériau élastomère (15), et une chambre d'expansion (42), ces deux chambres étant remplies au moins partiellement de liquide et reliées entre elles par un passage de communication (40), et du type dans lequel la chambre de travail (26) est également délimitée en partie par une cloison mobile (30) en matériau élastique et dont la face extérieure comporte un poussoir (52) avec lequel coopère une came (62) d'un dispositif d'entraînement de la cloison mobile pour appliquer à cette dernière des déplacements commandés de manière à créer dans la chambre de travail (26) des forces de pression synchrones avec les harmoniques des vibrations de l'un (16) desdits deux ensembles, caractérisé en ce que l'axe (64) d'entraînement en rotation de la came (62) est monté tournant dans un palier (66) fixé à l'une (12) des deux armatures.

2. Support hydroélastique selon la revendication 1, caractérisé en ce que ladite armature (12) est une armature de forme générale cylindrique dont une première extrémité axiale est reliée à la masse de matériau élastomère (15) et dont la seconde extrémité axiale (22) reçoit un couvercle de fermeture (68) dans lequel est agencé le palier (66) de l'arbre d'entraînement (64) de la came (62).

3. Support hydroélastique selon la revendication 2, caractérisé en ce que la seconde extrémité axiale (22) de l'armature cylindrique (12) comporte une bride de fixation du support (10) sur ledit ensemble (16), et en ce que le couvercle (68) comporte une bride radiale (74) agencée en vis-à-vis de la bride (22) de l'armature (12) contre laquelle elle est serrée axialement avec interposition de la portion correspondante dudit ensemble (16) qui reçoit le support hydroélastique.

4. Support hydroélastique selon l'une quelconque des revendications 1 à 3, caractérisé en ce que le poussoir (52) comporte un galet (56) monté tournant selon un axe (Y-Y) perpendiculaire à la direction (X-X) d'action du poussoir sur la cloison mobile (32) et avec lequel coopère la came (62) dont l'axe de rotation (Z-Z) est parallèle à celui (Y-Y) du galet (56).

5. Support hydroélastique selon l'une quelconque des revendications précédentes, caractérisé en ce que la chambre d'expansion (42) est de forme générale annulaire et délimite un logement intérieur (51) dans lequel est agencé le poussoir (52).

## Patentansprüche

1. Hydroelastisches Lager (10) zum Einfügen zwischen zwei gegeneinander abzustützende Anordnungen, insbesondere zum Abstützen eines Motors in einem Kraftfahrzeug, mit zwei Beschlagteilen (12,14), die jeweils mit den beiden Anordnungen verbunden sind, welche Beschlagteile durch eine Masse aus einem elastomeren Material (15) verbunden sind, welches Lager (10) wenigstens eine Arbeitskammer (26), die wenigstens teilweise durch die Masse aus elastomerem Material (15) begrenzt ist, und eine Ausdehnungskammer (42) umfaßt, welche beiden Kammern wenigstens teilweise mit Flüssigkeit gefüllt und miteinander durch einen Verbindungskanal (40) verbunden sind, wobei die Arbeitskammer (26) ebenfalls teilweise durch einen beweglichen Verschluß (30) aus elastischen Material begrenzt ist, dessen äußere Fläche ein Stößel (52) aufweist, mit dem ein Nocken (42) einer Antriebseinrichtung des beweglichen Verschlusses zur Abgabe von Verschiebebefehlen an den Verschluß zur Bildung von Druckkräften in der Arbeitskammer (26) zusammenwirkt, die mit den Harmonischen der Schwingungen einer (16) der beiden Anordnungen synchronisiert sind, dadurch **gekennzeichnet**, daß die Achse (64) des Drehantriebs des Nocken (62) drehend in einem Lager (66) gelagert ist, das an einem (12) der beiden Beschlagteile befestigt ist.

2. Hydroelastisches Lager gemäß Anspruch 1, dadurch **gekennzeichnet,** daß der Beschlagteil (12) ein Beschlagteil mit generell zylindrischer Form ist, dessen eines axiales Ende mit der Masse aus elastomerem Material (15) verbunden ist und dessen zweites axiales Ende (22) einen Verschlußdeckel (68) aufnimmt, in dem das Lager (66) der Antriebswelle (64) des Nocken (62) angetrieben wird.

3. Hydroelastisches Lager gemäß Anspruch 2, dadurch **gekennzeichnet**, daß das zweite axiale Ende (22) des zylindrischen Beschlagteils (12) einen Befestigungsflansch zur Befestigung des Lagers (10) an der Anordnung (16) aufweist und daß der Deckel (68) einen radialen Flansch (74) aufweist, der gegenüber dem Flansch (229 des Beschlagteils (12) angeordnet ist, gegen den der Flansch axial unter Einfügung des entsprechenden Bereichs der Anordnung (16), die das hydroelastische Lager aufnimmt, vorgespannt ist.

4. Hydroelastisches Lager nach einem der Ansprüche 1 bis 3, dadurch **gekennzeichnet**, daß das Stößel (52) eine Rolle (56) umfaßt, die drehbar in der Achse (Y',Y) senkrecht zu der Richtung (X',X) der Wirkung des Stößels auf den beweglichen Verschluß (32) montiert ist und mit der der Nocken (62) zusammenwirkt, dessen Drehachse (Z',Z) parallel zu derjenigen (Y',Y) der Rolle (56) verläuft.

5. Hydroelastisches Lager nach einem der vorhergehenden Ansprüche, dadurch **gekennzeichnet**, daß die Ausdehnungskammer (42) im wesentlichen ringförmig ausgebildet ist und einen inneren Raum (51) begrenzt, in dem das Stößel (52) angeordnet ist.

## Claims

1. Hydroelastic support (10) intended to be interposed between two assemblies to be suspended one with respect to the other, especially for the suspension of an engine in a motor vehicle, of the type comprising two armatures (12, 14) connected respectively to the two assemblies, these two armatures being joined by a block of elastomeric material (15), the support (10) comprising at least one working chamber (26) delimited at least in part by the block of elastomeric material (15), and an expansion chamber (42), these two chambers being filled at least partially with liquid and linked together by a communication passage (40), and of the type in which the working chamber (26) is also delimited in part by a movable diaphragm (30) of elastic material and whereof the external face comprises a cam follower (52) with which a cam (62) of a drive device of the movable diaphragm cooperates in order to apply to the latter displacements controlled in such a way as to create in the working chamber (26) pressure forces synchronous with the harmonics of the vibrations of one (16) of the said two assemblies, characterised in that the rotational drive shaft (64) of the cam (62) is mounted to rotate in a bearing (66) fixed to one (12) of the two armatures.

2. Hydroelastic support according to Claim 1, characterised in that the said armature (12) is an armature of generally cylindrical form of which a first axial extremity is connected to the block of elastomeric material (15) and whereof the second axial extremity (22) receives a closing cover (68) in which is arranged the bearing (66) of the drive shaft (64) of the cam (62).

3. Hydroelastic support according to Claim 2, characterised in that the second axial extremity (22) of the cylindrical armature (12) comprises a flange for fixing the support (10) to the said assembly (16), and in that the cover (68) comprises a radial flange (74) arranged to line up with the flange (22) on the armature (12) against which it is clamped axially with interposition of the corresponding portion of the said assembly (16) which receives the hydroelastic support.

4. Hydroelastic support according to one of Claims 1 to 3, characterised in that the cam follower (52) comprises a wheel (56) mounted rotatably on an axis (Y-Y) perpendicular to the direction (X-X) of action of the cam follower on the movable diaphragm (32) and with which the cam (62) whose axis of rotation (Z-Z) is parallel to that (Y-Y) of the wheel (56) cooperates.

5. Hydroelastic support according to one of the preceding Claims, characterised in that the expansion chamber (42) is of generally annular form and delimits an interior housing (51) in which the cam follower (52) is arranged.
